# FASCICULE DE BREVET EUROPEEN

(11) **EP 3 724 057 B1**
(45) Date de publication et mention de la délivrance du brevet: **12.10.2022**
(21) Numéro de dépôt: 18830197.2
(22) Date de dépôt: 14.12.2018
(51) Int. Cl.: B62D 1/184, B62D 1/19

(54) **COLONNE DE DIRECTION À BUTÉE DE FIN DE COURSE DE RÉGLAGE**
LENKSÄULE MIT VERSTELLANSCHLAG
STEERING COLUMN WITH ADJUSTMENT LIMIT STOP

(30) Priorité: 15.12.2017 FR 1762256
(43) Date de publication de la demande: 21.10.2020
(73) Titulaire: Robert Bosch Automotive Steering Vendome S.A.S., 41100 Route de Blois 2 (FR)
(72) Inventeur: GENET, Nicolas, 41100 Coulommiers la Tour (FR); PATA, Christophe, 41100 Coulommiers-la-Tour (FR); RENARD, Jeremy, 41100 Naveil (FR); FRELON, David, 37110 Neuville sur Brenne (FR)
(74) Mandataire: Alatis
(86) Numéro de dépôt international: PCT/EP2018/085027
(87) Numéro de publication internationale: WO 2019/115796

(56) Documents cités:
- EP-B1- 2 585 355
- JP-A- H 092 294
- US-A- 6 039 350

## Description

### Domaine de l'invention

La présente invention se rapporte à une colonne de direction comportant un dispositif de butée de fin de course de réglage en compression d'une colonne de direction, limitant le réglage en compression à cette position de fin de course pour réserver une course de compression d'absorption d'énergie, comportant : un corps recevant dans un palier déformable, le manchon portant le volant, réglable longitudinalement par rapport au corps, un mécanisme de serrage ayant un axe avec un levier de manœuvre portant un dispositif de serrage comprimant le palier déformable dans lequel peut coulisser le manchon, ce dispositif de serrage bloquant le manchon en position de serrage et libérant son coulissement en position desserrée, l'axe du mécanisme de serrage étant pivoté entre ses deux positions par le conducteur avec le levier de manœuvre.

### Etat de la technique

Les véhicules automobiles actuels sont majoritairement équipés d'un système de réglage du volant en profondeur et en hauteur (réglage angulaire et réglage longitudinal). Le réglage en profondeur se fait à l'aide d'un ensemble de tubes télescopiques intégré à la colonne de direction. Un mécanisme de serrage permet, en position déverrouillée, (ou position desserrée) d'ajuster la position du volant et en position verrouillée, (position serrée) de maintenir le volant dans la position choisie.

En cas de choc frontal du véhicule, les tubes télescopiques fournissent la course nécessaire à l'absorption de l'énergie du choc du conducteur contre l'airbag et le volant. Cette course est supérieure à la course de réglage du volant et peut contenir une partie de celle-ci. Un système à friction ou à déformation génère l'effort qui, associé au mouvement, absorbe l'énergie du choc.

Si la course d'absorption d'énergie inclut une partie de la course de réglage, il y a une discontinuité à la fin de la course de réglage qui est limitée par des butées. Au-delà de la course d'absorption d'énergie allant au-delà de la course de réglage, la butée de fin de course de réglage ne doit pas arrêter le mouvement de la course d'absorption d'énergie. Pour cela, on utilise une butée sécable, dimensionnée de façon à résister aux efforts pour les manœuvres de réglage jusqu'à venir en butée. Cette butée se casse en cas de choc frontal si le mouvement d'absorption d'énergie doit aller au-delà de la fin de course de réglage. Le dimensionnement de la butée doit permettre sa rupture à un niveau suffisamment faible pour ne pas bloquer le mouvement d'absorption d'énergie.

Même si le dimensionnement de la butée est optimisé, il est toujours nécessaire d'appliquer un effort significatif pour provoquer la rupture. Cet effort crée un pic qui se superpose à l'effort généré par le système d'absorption d'énergie. Ce pic d'effort peut perturber le fonctionnement optimum de la colonne de direction en cas de collision frontale et développer des efforts inacceptables.

Or, les exigences de plus en plus élevées imposées aux constructeurs automobiles concernant la performance des véhicules en situation de collision, combinées à l'encombrement réduit alloué à la colonne de direction nécessitent d'utiliser la course de réglage du volant pour absorber l'énergie du choc. La course nécessaire en situation de choc frontal est supérieure à la course de réglage de sorte que la colonne de direction doit aller au-delà de cette course sans être limitée par les butées de réglage de la course du volant.

Dans le document EP 2 585 355 Al est décrite une colonne de direction selon le préambule de la revendication 1.

### But de l'invention

La présente invention a pour but de développer une colonne de direction permettant de répondre à ces exigences concernant l'absorption de l'énergie par une course au-delà de la course de réglage en réalisant une évolution aussi continue que possible des efforts dans la course de compression du volant et du mécanisme qui le porte, en cas de collision, sans créer de pic d'effort comme dans les solutions de l'état de la technique.

### Exposé et avantages de l'invention

A cet effet, la présente invention a pour objet une colonne de direction selon la revendication 1.

La colonne de direction selon l'invention a l'avantage de garantir une course d'absorption d'énergie qui impose à la partie mobile, c'est-à-dire au manchon portant le volant en cas de poussée violente, une évolution d'effort sans discontinuité ni pic d'effort, par une course régulière pour absorber efficacement l'énergie du choc.

Le verrou qui limite la plage de réglage longitudinal du manchon est mis en position escamotée après le pré-serrage des réglages et il y est maintenu mécaniquement de sorte qu'il n'y a pas de risque que le choc exercé sur le volant et le manchon ne mette le verrou en position active susceptible d'interférer avec le manchon et de bloquer sa course d'amortissement.

La colonne de direction selon l'invention ne crée pratiquement pas d'encombrement supplémentaire et ne limite en aucune manière les possibilités de réglage angulaire et longitudinal de la colonne de direction en fonction des desiderata du conducteur. La manœuvre imposée au conducteur pour effectuer le réglage est inchangée par rapport à une manœuvre traditionnelle qu'il aura effectuée avec des colonnes de direction connues, de sorte que pour l'utilisateur, la colonne de direction selon l'invention n'impose aucun apprentissage nouveau et son fonctionnement reste apparemment traditionnel.

Suivant une autre caractéristique avantageuse le dispositif de butée comporte une découpe dans le manchon ou dans une lame et cette découpe a un bord qui forme la butée contre laquelle vient la surface de butée du verrou pour la fin de course de réglage en compression de la colonne de direction.

Cette forme de réalisation est avantageuse car elle offre une grande liberté de conception et permet de choisir des matériaux ayant des caractéristiques différentes, appropriées pour le manchon et le bord de butée. Cette pièce rapportée renforce en outre la zone d'action du verrou sur le manchon.

Suivant une autre caractéristique avantageuse, la découpe forme une languette limitant le mouvement du verrou au-delà de sa venue en appui par sa surface d'appui contre le bord de butée. Cette découpe peut être réalisée soit dans le manchon, soit dans une pièce rapportée au manchon.

Ainsi, de manière avantageuse, le dispositif de butée est réalisé dans une lame fixée au manchon dans la zone du manchon passant sous le verrou. Ce dispositif de butée peut être ainsi réalisé dans une autre matière ou une matière ayant des caractéristiques différentes de celles du manchon pour des raisons de tenue à la butée et éventuellement pour améliorer l'effet d'absorption de l'énergie du choc sur le volant.

Suivant une autre caractéristique avantageuse, le verrou est une pièce installée autour de l'axe et ayant un bec portant la surface de butée, au moins une oreille munie d'un orifice pour recevoir l'axe et une coulisse courbe bordant l'orifice et recevant la nervure d'entraînement solidaire de l'axe pour réaliser une plage de mouvement relatif libre entre l'axe et le verrou, un ressort solidaire de l'axe et s'appuyant sur le bec pour pousser la surface de butée vers la position de blocage. Cette forme de réalisation du verrou est simple et sans augmenter l'encombrement de la colonne de direction puisque le verrou est installé sur l'axe du mécanisme de serrage qui bloque les réglages de la colonne de direction.

Suivant une autre caractéristique avantageuse, le verrou comporte deux oreilles, pour chevaucher chacune l'axe et sa nervure, et une cale bloquée sur l'axe et sur sa nervure pour retenir le verrou par ses deux oreilles sur l'axe et sa nervure dans la direction de l'axe.

Cette forme de réalisation de la lame est particulièrement simple à réaliser et à assembler.

Suivant une autre caractéristique avantageuse, le ressort est un ressort-lame terminé par deux pinces munies chacune d'un orifice pour s'enclipser sur l'axe par cet orifice muni d'une découpe recevant la nervure de l'axe de façon à ainsi solidariser le ressort à l'axe pour le mouvement de rotation.

Les deux pinces du ressort sont avantageusement intercalées entre la cale et les deux oreilles, de part et d'autre de la cale de sorte que les pinces ne peuvent s'échapper latéralement. Elles assurent ainsi le positionnement précis de la lame du ressort dont l'extrémité s'appuie sur le bec du verrou pour enfoncer celui-ci en position de blocage par sa surface de butée contre la butée du dispositif de butée.

### Dessins

La présente invention sera décrite ci-après, de manière plus détaillées à l'aide d'un mode de réalisation d'une colonne de direction représentée dans les dessins annexés dans lesquels :
- la figure 1 est une vue isométrique d'une colonne de direction selon l'invention,
- la figure 2 est une vue éclatée correspondant à la figure 1,
- la figure 3 est une vue de côté de la colonne de direction,
- la figure 3A est une vue en coupe du manchon et du tube de la colonne de direction portant le volant,
- la figure 4 est une vue isométrique de la lame du dispositif de blocage de fin de course,
- la figure 5 est une vue éclatée de l'axe de serrage et du verrou du dispositif de blocage,
- la figure 5A est une vue du dispositif de verrouillage assemblé,
- la figure 6A est une vue de côté du verrou,
- la figure 6B est une vue en coupe de la lame du dispositif de blocage de fin de course,
- les figures 7A, 7B sont deux vues isométriques du verrou du dispositif de blocage de fin de course,
- la figure 8, dans ses parties 8A-8C, montre les trois positions caractéristiques de l'axe de serrage :
   - la figure 8A montre la position de serrage des réglages,
   - la figure 8B montre la position de pré-serrage,
   - la figure 8C montre la position de desserrage,
- la figure 9A est une vue de côté de la colonne de direction à l'état réglé dans une position d'extension intermédiaire de la plage de réglage,
- la figure 9B est une vue de côté de la colonne de direction à l'état réglé dans une position d'extension complète,
- la figure 9C est une vue de côté de la colonne de direction à l'état comprimé après un choc,
- les figures 10A-10B et 11A-11E montrent la coopération entre le verrou et la lame du dispositif de blocage dans différentes positions de fonctionnement,
- la figure 12A est une vue en coupe du verrou en position de blocage et axe en position de presserrage.
- la figure 12B est une vue en coupe du dispositif de blocage en position de blocage auxiliaire.

### Description d'un mode de réalisation de l'invention

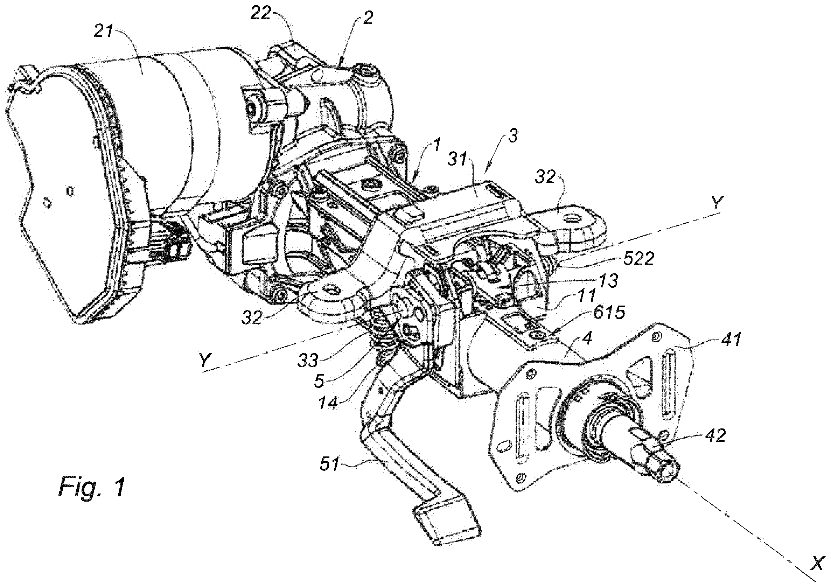

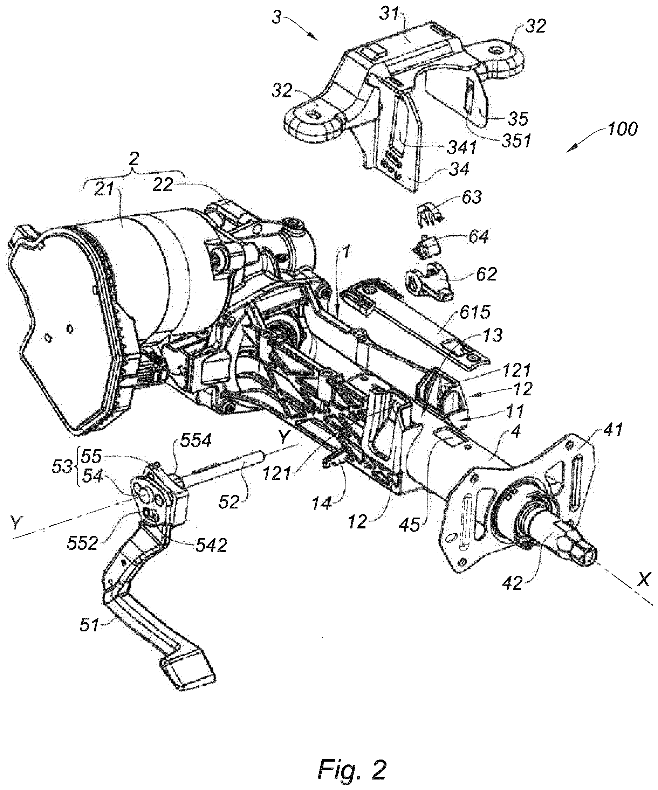

Selon les figures 1 et 2, l'invention a pour objet une colonne de direction 100, représentée schématiquement sans l'environ-nement dans lequel elle est installée, sans l'habillage et sans le volant.

La colonne de direction 100 se compose d'un corps 1 en forme de boîtier, de section rectangulaire, relié au module d'assistance 2 coopérant avec la crémaillère de direction pour commander l'orientation des roues directrices. Le module d'assistance 2 comporte un moteur 21 avec ses accessoires de commande tels que le capteur de rotation du volant pour activer le moteur 21. Le corps 1 reçoit de façon réglable longitudinalement, un manchon 4 muni du support 41 portant les éléments de commande par exemple pour la régulation de vitesse, le système audio, le téléphone, et certaines fonctions du tableau de bord. Le manchon 4 loge le tube 42 portant le volant. Le corps 1 est, lui-même monté pivotant dans un plan "vertical" par rapport à la carrosserie pour le réglage angulaire de la position du volant en complément de son réglage longitudinal selon l'axe XX. Le réglage longitudinal du manchon 4 est synonyme de réglage longitudinal du volant puisque le manchon 4 et le tube 42 sont solidaires en translation.

Dans la suite de la description des revendications, lorsqu'il s'agit du réglage du manchon, cela signifie implicitement que le réglage concerne le volant.

Pour permettre les réglages, cet ensemble est muni, côté module d'assistance 2, d'une patte 22 portant un pivot et près de l'extrémité du corps, d'un support 3 fixé à la carrosserie, comme le pivot 22. Ce montage permet le réglage angulaire par basculement (dans un plan vertical, par rapport à la carrosserie) et en extension axiale (XX) pour le tube 42 portant le volant.

L'ensemble est muni d'un mécanisme de serrage 5 qui se desserre pour permettre le réglage à la fois angulaire et en extension axiale et dont le serrage bloque les réglages effectués par le conducteur. Le mécanisme de serrage 5 libère à la fois le basculement de la colonne 100 autour du pivot 22 et l'extension axiale du manchon 4 de la colonne de direction 100.

Pour la présente invention et sa description, seul importe le réglage longitudinal.

Le manchon 4 coulissant, est logé dans un palier déformable 11 réalisé à l'entrée 13 du corps 1. Le palier 11 permet, lorsqu'il n'est pas serré, de coulisser le manchon 4 dans la direction de l'axe XX pour régler la position d'extension de la colonne de direction. A l'état serré, le palier 11 est bloqué contre le manchon 4 et l'immobilise. Ce serrage est réalisé par le mécanisme de serrage 5 manœuvré par un levier 51. Pour des raisons de sécurité imposées par certaines réglementations, le mécanisme de serrage 5 permet, même à l'état serré, le coulissement du manchon 4 poussé par le mouvement du conducteur qui, en cas de choc accidentel est propulsé contre l'airbag et le volant. Le volant doit pouvoir alors s'enfoncer pour absorber l'énergie du choc par frottement, notamment dans le palier 11 serré et dans un dispositif amortisseur non détaillé et cela sur une certaine course de déplacement.

La vue éclatée de la figure 2 permet de mieux voir la forme des composants et leur organisation. Le corps 1 est une pièce nervurée, rigide au-delà de sa zone d'entrée 13 formant le palier déformable 11, par exemple, une pièce en alliage, injecté. Outre les surfaces du palier 11 en contact avec le manchon 4, le corps 1 comporte des surfaces de guidage 12 recevant extérieurement le mécanisme de serrage 5 manœuvré par le levier 51 ainsi que les moyens de liaison du support 3.

Le support 3 en forme de cavalier, fixé à la carrosserie, se compose d'une traverse 31 avec deux pattes 32 venant de part et d'autre du corps 1 auquel elles sont reliées par deux ressorts de rappel 33, accroché chacun à une patte 14 et soutenant le poids du corps 1 lorsque le mécanisme de serrage 5 est libéré (figure 1). Le support 3 est muni de deux joues de guidage 34, 35 venant latéralement contre les surfaces d'appui 12 extérieures du corps 1. Les joues 34, 35 ont des coulisses 341, 351 pour recevoir le mécanisme de serrage 5. Ce mécanisme 5 est formé d'un axe de serrage 52 portant un dispositif de serrage 53. Une extrémité de l'axe 52 est solidaire du levier 51 manœuvrant le mécanisme et l'autre extrémité est filetée 521 pour recevoir un écrou 522 (figure 1). L'axe de serrage 52 a un axe géométrique YY transversal, perpendiculaire à l'axe XX du manchon 4 et plus généralement de la colonne de direction 100.

Le dispositif de serrage 53 agissant dans la direction transversale YY, est formé d'une plaquette 54 solidaire de l'extrémité du levier 51 et de l'axe 52 ainsi que d'une base rectangulaire 55 engagée librement sur l'axe 52 et ayant au dos, un coulisseau 551 solidaire de la base 55.

La plaquette 54 et la base 55 coopèrent par des organes d'extension tels que des rampes ou des biellettes à rotules formant des organes d'écartement permettant de modifier l'écartement de la plaquette 54 et de la base 55 dans la direction YY pour tirer sur l'axe de serrage 52 et serrer le mécanisme. Ces organes d'écartement connus ne nécessitent pas de description détaillée et ne sont pas apparents. Il suffit de souligner qu'ils sont actionnés par le mouvement de pivotement du levier 51, c'est-à-dire de la plaquette 54 par rapport à la base 55 : comme indiqué, les faces en regard de la plaquette 54 et de la base 55 coopèrent par les rampes ou par la paire de biellettes dont les deux extrémités en forme de rotule sont appuyées chacune dans une coupelle 541 de la plaquette 54 et dans une coupelle de la base 55. Les coupelles ainsi que les biellettes sont dans des positions symétriques par rapport à l'axe de serrage 52.

Le mouvement de pivotement relatif de la plaquette 54 par rapport à la base 55, incline ou redresse les biellettes réduisant ou augmentant l'écartement entre la plaquette 54 et la base 55 et créant l'effet de traction exercé par l'axe de serrage 52.

L'axe de serrage 52 traverse l'une et l'autre des joues de guidage 34, 35 du support 3, appliquées extérieurement contre les surfaces d'appui 12 du palier déformable llainsi que les perçages 121 de ces deux surfaces d'appui 12.

Le coulisseau 551 de la base 55 se loge dans la coulisse 341 de section appropriée de l'une 34 des joues du support 3 et l'extrémité filetée de l'axe 51 traverse la coulisse 351 plus étroite de l'autre joue 35 pour recevoir l'écrou 521 (figure 1).

Le mécanisme de serrage 5 appuie, par la base 55 contre la joue de guidage 34 et par l'écrou 521 contre l'autre joue de guidage 35, les deux joues étant, elles-mêmes, en appui contre les surfaces d'appui 12 du palier 11.

En position desserrée, l'écartement entre la plaquette 54 et la base 55 est au minimum de sorte que le palier 11 n'est pas serré, de même que les joues 34, 35 du support 3 par rapport aux surfaces d'appui 12. En position serrée, l'écartement entre la plaquette et la base augmente ce qui réduit l'écartement entre la base 55 et l'écrou 521 de sorte que les joues 34, 35 et les surfaces d'appui 12 sont comprimées et bloquent :
- le manchon 4 dans le palier 11 (réglage en extension),
- les joues 34, 35 contre les surfaces d'appui 12 (réglage angulaire).

Le mouvement du levier 51 pour le serrage / desserrage est limité par un ergot 552 solidaire de la base 55 et logé dans une coulisse 542 en arc de cercle de la plaquette 54. Il convient de remarquer que la base 55 est bloquée en pivotement par l'engagement de son coulisseau 551 dans la coulisse 341 de la joue 34 du support 3

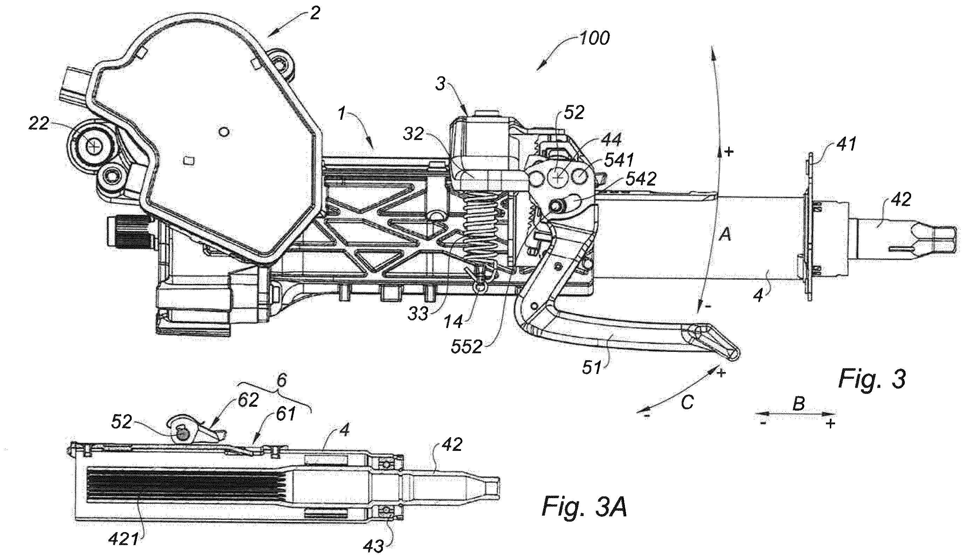

La vue de côté de la figure 3 met en évidence les plages de réglage suivantes :
- le réglage angulaire dans le plan vertical (par rapport à la carrosserie) (flèche A) dans le sens montant (+) et dans le sens descendant (-). La plage de réglage angulaire est limitée par la coulisse 342 du support 3,
- le pivotement du levier 51 autour de l'axe transversal YY est indiqué par la flèche curviligne C. A la figure 3 le levier 51 est en position verrouillée. Pour déverrouiller il faut pousser le levier 51 dans la direction (-),
- le réglage longitudinal ou télescopique du manchon 4 selon l'axe XX (flèche B) dans le sens de l'extension (+) et de la compression (-). Ce réglage est limité dans les deux directions. Il peut être dépassé en compression, en cas de choc.La figure 3A montre le détail du manchon 4 et
du tube 42 portant le volant. Le manchon 4 est bloqué en rotation dans le corps 1 alors que le tube 42 du volant est solidaire en translation (direction XX) du manchon 4 mais libre en rotation par rapport à celui-ci. Il est monté dans un palier à roulement 43. Intérieurement, l'extrémité 421 du tube 42 est cannelée pour recevoir l'extrémité à cannelures extérieures du tube fixe en translation, relié au module d'assistance 2 pour permettre le coulissement télescopique du manchon 4 et du tube 42.Cette figure 3A montre également le dispositif de butée de fin de course de réglage en compression 6 décrit ci-après.En effet, la colonne de direction 100 selon l'invention a un dispositif de butée de fin de course de réglage en compression 6, activé par le desserrage du mécanisme de serrage 5 libérant le réglage angulaire et le réglage longitudinal.

Le dispositif de butée de fin de course 6 se compose d'une butée de fin de course de compression 61 réalisée sur ou dans le manchon 4 et d'un verrou 62 porté par l'axe de serrage 52, venant contre la butée de fin de course 61 pour limiter dans cette direction (XX), le réglage longitudinal tout en permettant le dépassement de cette limite en cas de choc du conducteur contre le volant lors d'une collision du véhicule.

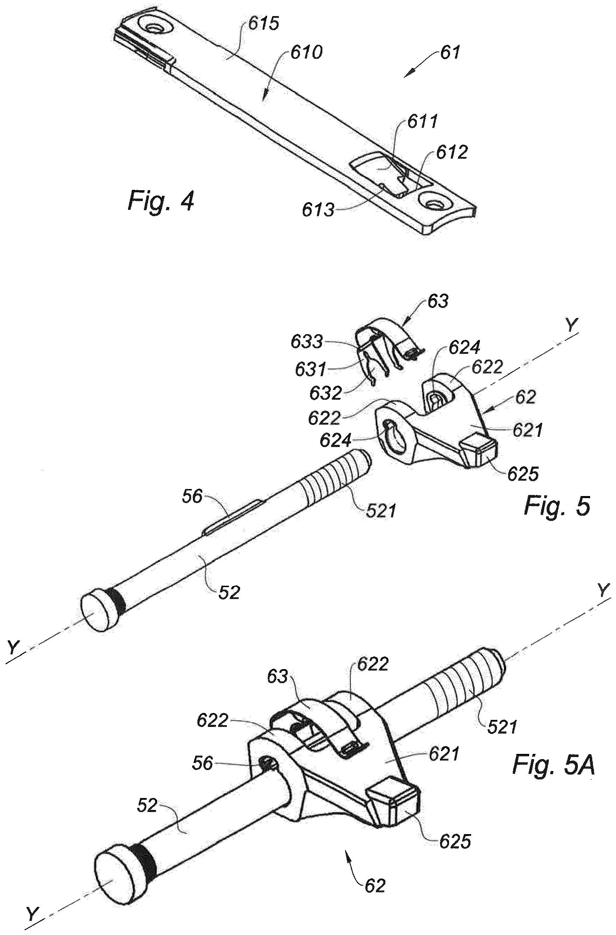

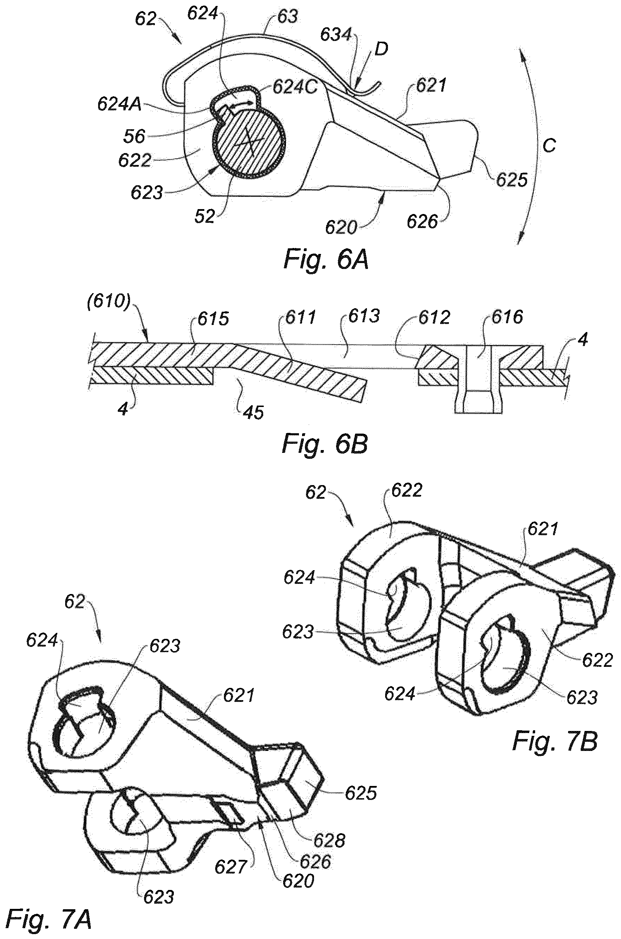

Selon la figure 4, la butée de fin de course 61 est formée par une languette 611 et un bord de butée 612. La languette 611 constitue un appui pour limiter le pivotement du verrou 62 et son maintien en position contre le bord de butée 612 de la découpe 613 ainsi réalisée dans une lame 615 rapportée au manchon 4. La languette 611 et le bord de butée 612 peuvent aussi être réalisés directement dans le manchon 4. Dans le cas de la lame 615 fixée par des rivets 616, le manchon 4 comporte une découpe 614 pour recevoir la languette en saillie 611 (voir figure 6B)

Dans l'autre cas non représenté, la languette est découpée dans le manchon et le bord de la découpe forme le bord de butée.

Le dispositif de butée de fin de course 6 est situé dans le plan médian du manchon 4 et ainsi dans le passage 13 laissé libre par le palier déformable 11 du corps 1 (figure 2).

Le verrou 62 (figures 5, 5A, 6A) est une pièce de forme, par exemple en une ou plusieurs matières plastiques, selon la dureté nécessaire de telle ou telle partie du verrou. Le verrou 62 est formé d'un bec 621 relié à deux oreilles 622 munies chacune d'une ouverture circulaire 623 de section égale à celle de l'axe de serrage 52 pour être emmanchée sur celui-ci. Les ouvertures circulaires 623 sont bordées chacune par une coulisse 624 en arc de cercle pour recevoir la nervure d'entraînement 56 réalisée sur l'axe de serrage 52. La coulisse 624 a deux extrémités 624A et 624C. La coulisse 624 permet ainsi le pivotement limité, relatif entre l'axe de serrage 52 et le verrou 62 (figure 6A). Les deux oreilles 622 reçoivent entre elles un ressort-lame 63 porté par deux pinces 631 avec une ouverture circulaire 632 et un fond muni d'une découpe 633 de façon à pouvoir se clipser sur l'axe de serrage 52 au droit de la nervure 56 qui se loge alors dans les deux découpes 633. Le ressort-lame 63 est ainsi solidaire en mouvement de l'axe de serrage 52.

Les deux pinces 631 du ressort-lame 63 sont écartées pour recevoir entre elles une cale intermédiaire 64 (figure 2) enfilée sur l'axe 52 en même temps que le verrou 62 de manière à bloquer le verrou 62 sur la nervure 56 (dans la direction YY) et tenir le ressort-lame 63 en place. L'extrémité 634 du ressort-lame 63 appuie sur le bec 621 dans la direction D (figure 6A).

Cette forme de réalisation du verrou est symétrique et les coulisses 624 sont symétriques et coopèrent de la même manière avec la vis de serrage 52 et sa nervure d'entraînement 56 de sorte que pour simplifier la description ci-après, il ne sera question que de la coulisse 624 et non pas des coulisses 624.

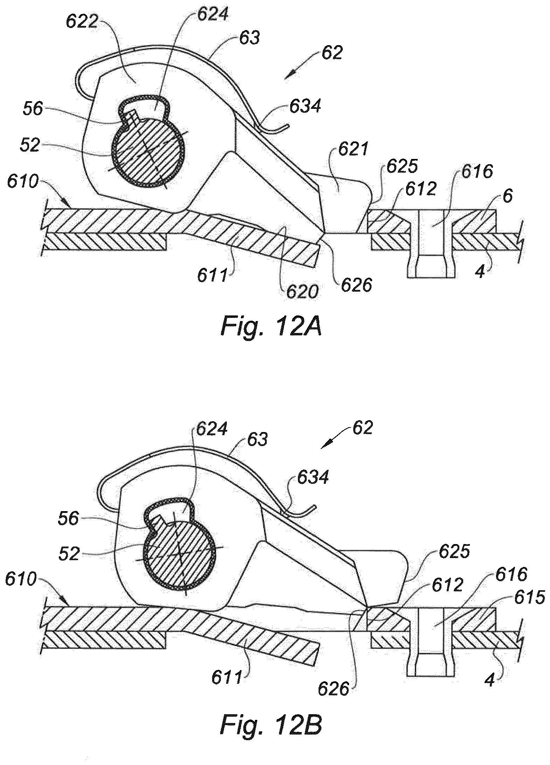

Selon les figures 6A, 7A, 7B, le bec 621 du verrou 62 a un dessous 620 lisse et une surface de butée 625 inclinée pour coopérer avec le bord de butée 612 du manchon 4 (ou de la lame 615 portée par le manchon). Cette surface 625 est complétée par une surface auxiliaire de butée 626 sous le bec 621 pour s'accrocher au bord de butée 612 au cas où, à cause de vibrations occasionnées par des mouvements brutaux ou des chocs exercés sur le manchon 4 pendant une manœuvre de réglage, la surface de butée 625 se décroche et se soulève légèrement du bord de butée 612. Le bec 621 appuyé par le ressort 63 reste alors retenu par cette seconde surface de butée 626 (figure 12B).

Le bec 621, a un dessous 620 muni d'une surface d'appui 627 souple, venant sur la languette 611 et aussi dans les autres positions, sur le dessus 620 (de la lame 615) ou du manchon 4 s'il n'y a pas de lame.

Il y a également une surface d'appui 628 entre les surfaces 625 et 626 comme cela apparaît, par exemple, à la figure 7A. Ces surfaces de glissement peuvent être réalisées en une matière plastique particulière, plus souple que celle du restant du verrou.

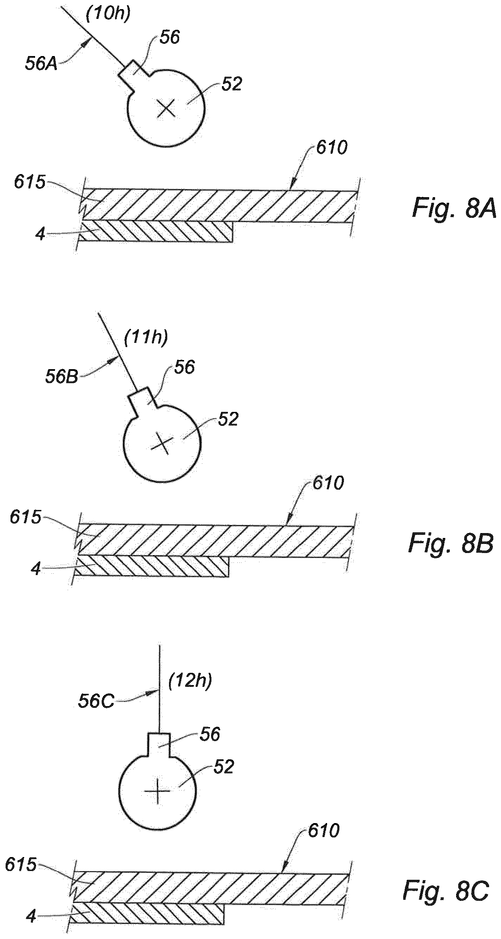

Pour expliquer le fonctionnement du mécanisme de serrage 5, les figures 8A-8C montrent trois positions caractéristiques de l'axe de serrage 52 et de sa nervure d'entraînement 56 ; ces positions correspondent respectivement à la position de serrage 56A, à la position de pré-serrage 56B et à la position de desserrage 56C.

Ces positions angulaires de l'axe de serrage 52 et surtout de sa nervure 56 sont celles du levier de commande 52. Alors que les positions 56A, 56C de la nervure 56 sont les positions définies et marquées pour le serrage et le desserrage du ou des réglages, la position intermédiaire 56B est une position proche de la position de serrage 56B mais qui n'est pas matérialisée par une butée ; elle n'est pas perçue lors de la manœuvre du levier 51.

Les positions angulaires 56A, 56C sont définies par les deux extrémités de la coulisse 542 butant par son pivotement par l'une ou l'autre de ses extrémités contre l'ergot fixe 552 (figure 3).

Tenant compte de l'orientation relative des différents composants, la position de verrouillage 56A est située à la position horaire 10h ; la position de pré-serrage 56B correspond à la position horaire 11h et la position de déverrouillage 56C correspond à la position horaire 12h.

La coulisse 624 du verrou 64 qui reçoit la nervure 56 entraîne le pivotement du verrou 52 ou libère ce pivotement suivant les mouvements qui sont imprimés au verrou 62 par le ressort 63 et par la nervure 56.

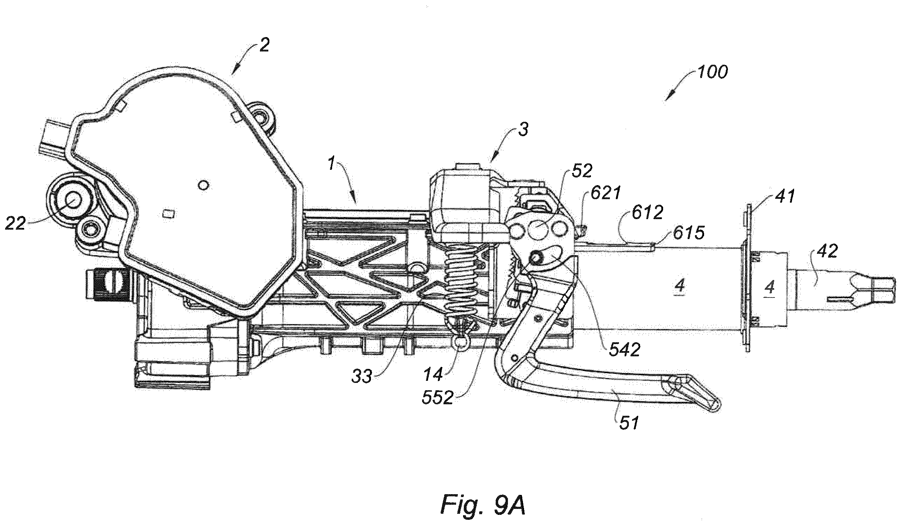

La figure 9A est une vue de côté de la colonne de direction 100, réglée dans une certaine position de blocage des réglages. Le bec 621 du verrou 62 est soulevé et n'est pas en contact avec le bord de butée 612 de la lame 615.

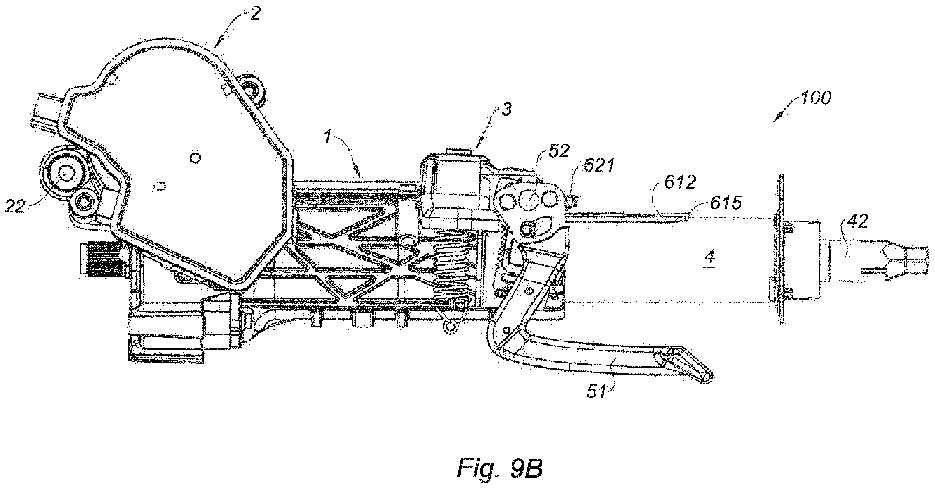

La figure 9B montre une position de blocage des réglages analogue à celle de la figure 9A mais pour un autre réglage correspondant, par exemple, à la position complètement étirée du manchon 4 dans la direction longitudinale (XX).

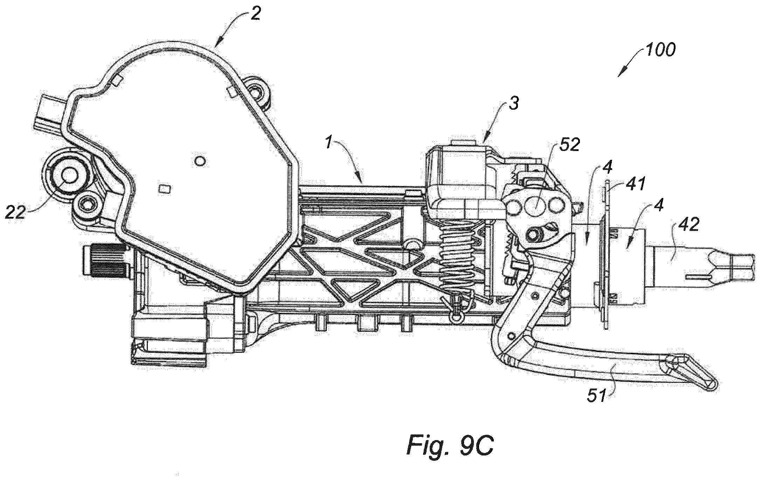

La figure 9C est une vue de côté de la colonne de direction 100 après un choc montrant l'état final de compression du manchon 4 dans le corps 1 de la colonne de direction.

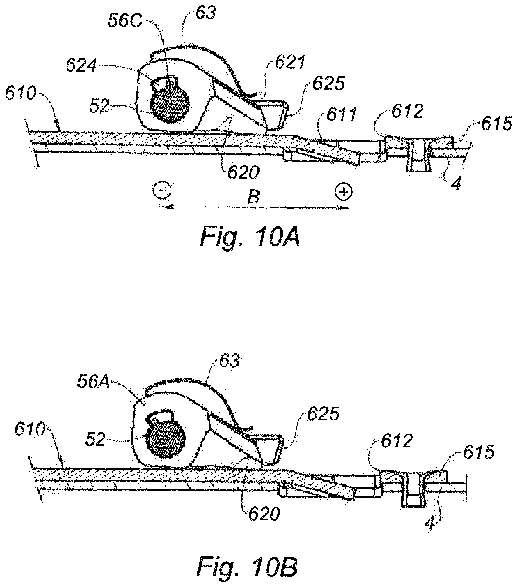

Les mouvements de serrage et de desserrage du moyen de serrage 5 seront décrits ci-après à l'aide des figures 10A-11E qui montrent différentes positions du verrou 62 et de l'axe 52 avec sa nervure d'entraînement 56 dans la coulisse 624 du verrou 62. Ces figures sont celles d'un dispositif de butée 6 réalisé dans une lame 615 fixée au manchon 4. Pour ne pas surcharger les figures, les références ne sont pas systématiquement reprises dans toutes les figures 10A-11E.

Il faut rappeler que l'invention a pour but de définir la plage de réglage longitudinal (direction XX) dans le sens de la compression (B-) pour conserver une plage de compression efficace en cas de choc violent du conducteur contre le volant.

Dans toutes les figures 10A-11E, la position représentée de l'axe de serrage 52 est la même et le seul changement pour l'axe 52 est son mouvement de pivotement commandé par le levier 51 entre la position serrée (position courante) et la position desserrée (position exceptionnelle) pour le réglage angulaire et longitudinal. L'axe de serrage 52 est solidaire en translation (direction XX) du corps 1 et constitue le repère de réglage longitudinal du manchon 4.

Le pivotement du levier 51 et de son axe 52 est limité comme indiqué ci-dessus, par la plage de mouvement de l'ergot 552 dans la coulisse 542 ; cela se traduit par les deux positions extrêmes de pivotement 56A, 56C de la nervure d'entraînement 56.

Dans les deux positions de fin de course de pivotement (56A, 56C), la nervure 56 constitue une butée de fin de course de pivotement pour le verrou 62 dont la coulisse en arc de cercle 624 reçoit la nervure 56.

Pour la description du réglage longitudinal et de son blocage, il faut distinguer deux types de réglage suivant que ce réglage se fait dans une certaine position d'extension du manchon 4 par rapport à la position du verrou 62 ou suivant que le réglage se fait à la limite de compression autorisée du manchon 4 par rapport au corps 1.

Selon les figures 10A, 10B, pour le réglage normal qui ne se fait pas en limite de compression du manchon 4 dans le corps 1, il suffit de débloquer par le levier 51 le mouvement du manchon 4 pour que celui-ci puisse coulisser par rapport au corps 1 et au verrou 62.

Une fois ce réglage longitudinal (direction XX) effectué, combiné le cas échéant au réglage angulaire, on bloque ces réglages avec le levier 51 et l'axe 52. Pendant cette manœuvre de réglage, le manchon 4 a glissé sous le verrou 62 (dans la direction B- ou B+) sans atteindre la position limite ni l'engagement du verrou 62 contre le bord de butée 612.

Le réglage se bloque simplement par le pivotement du levier 51 qui entraîne l'axe 52 et sa nervure 56 dans la coulisse 624 en faisant pivoter le verrou 62 dont la surface 620 s'écarte de la surface 610 de la lame 615. Le verrou 62 reste dans cette position avec son bec 621 relevé de sorte qu'en cas de choc, le manchon 4 peut passer sous le verrou 62 sans que celui-ci ne risque de s'encastrer contre la butée 612 et de bloquer ce mouvement de translation (B-) pour amortir le choc violent contre le volant.

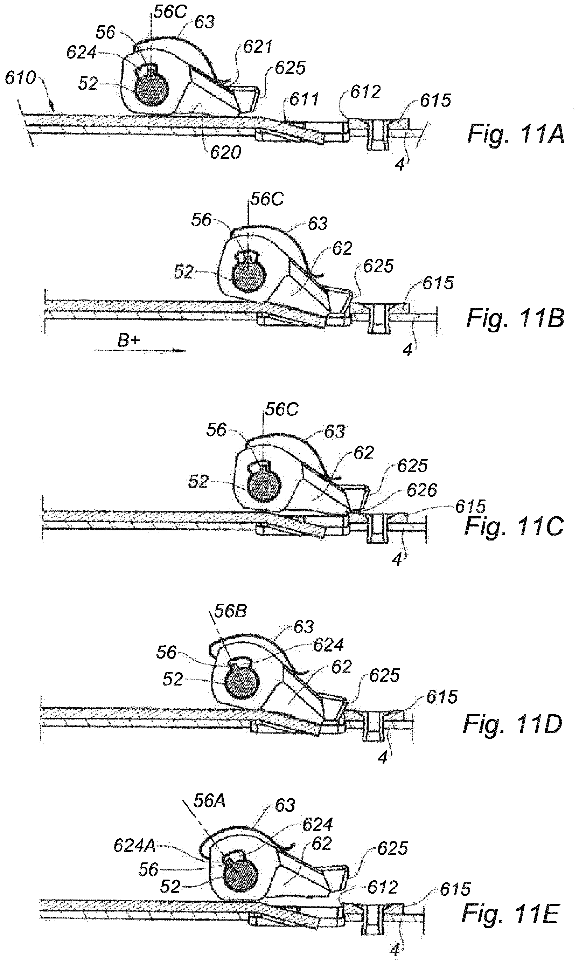

Selon les figures 11A, 11B, 11D, 11E, pour le réglage arrivant en limite de compression, la situation est traitée différemment par la manœuvre du levier 51 et de l'axe 52 par rapport au verrou 62.

Initialement on débloque le serrage du manchon 4 par le levier 51 et son axe 52. Le manchon 4 coulisse et la surface 620 du verrou glisse sur le dessus 610 du manchon 4 (figure 11A). Dès que le manchon 4 arrive par sa zone comportant le bord de butée 612 au niveau du verrou 62, celui-ci, poussé par le ressort 63, pivote et engage sa surface de butée 625 contre l'arête 612 (figure 11B). Le manchon 4 ne peut plus être coulissé pour le réglage par rapport au corps 1 au-delà de cette position limite.

Si le conducteur veut régler la colonne 100 dans cette position longitudinale, il manœuvre le levier 51 pour bloquer ce réglage (figure 11D). Mais pour les raisons de sécurité évoquées ci-dessus, il faut qu'en cas de choc violent sur le volant, le manchon 4 puisse être comprimé au-delà de cette position limite et pour cela le verrou 62 doit être dégagé du bord de butée 612.

Le passage de la position de réglage à la position de blocage du réglage se fait selon l'invention en passant par la position intermédiaire de pré-serrage (56B) dans laquelle le ou les réglages sont bloqués alors que le verrou 62 est encore engagé contre le bord de butée 612 (figure 11D).

Ce n'est qu'après ce blocage suffisant pour éviter que par un geste, le conducteur ne risque de comprimer le manchon 4 au-delà de la limite de compression 612, que le verrou 62 est libéré de l'arête de butée 612 pour la suite du mouvement de pivotement de la nervure d'entraînement 56 vers la position de verrouillage 56A ; la nervure 56 entraîne alors le verrou 62 et le dégage du bord 612 en le maintenant dans cette position dégagée pour ne pas bloquer la compression d'amortissement du manchon 4 en cas de choc violent contre le volant (figure 11E).

Pour obtenir cette position intermédiaire de pré-serrage 56B, la coulisse en arc de cercle 624 dépasse la position 56B pour que le verrou 62 ne soit pas dégagé de sa position de blocage avant que le serrage du manchon 4 par rapport au corps 1 soit suffisant pour maintenir ce réglage et que la nervure d'entraînement 56 ne pivote pas encore le verrou 62 ; ce n'est qu'ensuite que la nervure 56 vient en contact avec le bord 624A de la coulisse 624 pour entraîner le verrou 62 et le dégager du bord de butée 612. Le verrou 62 est maintenu dans cette position relevée de sorte que le manchon 4 pourra coulisser et amortir un choc brutal exercé sur le volant et ainsi sur le manchon 4.

Selon un cas particulier du réglage en position limite décrit ci-dessus à l'aide des figures 11A, 11B, 11D, 11E, il peut arriver que dans la position réglée en limite de compression selon la figure 11B, un mouvement ou un choc sur le verrou 62 le soulève légèrement bien qu'il soit appuyé par le ressort 63 ; le verrou risque alors de dégager sa surface de butée 625 du bord 612 mais restera accroché par sa surface auxiliaire 626.

La figure 11C montre ce cas particulier de blocage du manchon 4 en fin de course dans le sens de la compression.

En effet, dans la position desserrée et le réglage de la position de fin de course de compression de la figure 11C, il peut arriver qu'à cause d'un mouvement de réglage brutal ou de secousses imprimés au manchon 4 par le conducteur qui effectue les manœuvres de réglage, la surface de butée 625 échappe légèrement du bord de butée 612 de sorte que la surface de butée auxiliaire 626 s'accroche au bord de butée 612 et réalise la position de fin de course de compression pour le réglage longitudinal.

A partir de cette position 11C, on poursuit le mouvement de serrage par le pivotement de l'axe 52 pour arriver dans une position voisine de la position 56B (figure 11B) correspondant au pré-serrage. Cette position n'a pas été représentée. Ensuite, on termine le serrage (figure 11E) avec dégagement du verrou 62 qui permet le coulissement forcé du manchon 4 en cas de choc.

Les figures 12A et 12B montrent à échelle agrandie l'appui du verrou 62 par sa surface de butée 625 contre le bord de butée 612 et l'appui du verrou 62 par sa surface auxiliaire 626 contre le bord de butée 612 dans le cas d'un réglage en position limite.

Il convient d'ailleurs de souligner que les positions 12A, 12B peuvent être des positions occasionnelles de fin de course de réglage longitudinal que l'on peut aussi quitter par une simple translation du manchon 4 dans la direction d'extension B+ et arriver dans la position de réglage comme la position usuelle représentée aux figures 10A, 10B.

En conclusion, une fois le réglage longitudinal (et le réglage angulaire éventuel) fait, le mécanisme de serrage 5 bloque les réglages (réglage longitudinal et réglage angulaire concernés par ce dispositif de butée). Le dispositif de butée 6 est neutralisé car son pivotement retenu par l'axe 52 et la nervure 56.

En cas de choc contre le volant, le manchon 4 peut glisser sans être empêché par le dispositif de butée 6 car le dessous 620 du verrou 62 est sans contact avec le dessus 610 de la lame 615 ou en variante (sans lame 615) sur le dessus du manchon 4.

### NOMENCLATURE DES ELEMENTS PRINCIPAUX

- 100: Colonne de direction
- 1: Corps
11 Palier déformable
12 Surface d'appui
121 Perçage
13 Passage laissé libre par le palier
- 2: Module d'assistance
21 Moteur et accessoires
22 Pattes de pivot
- 3: Support
31 Traverse
32 Patte
33 Ressort de rappel
34 Joue
341 Coulisse
35 Joue
351 Coulisse
4 Manchon
41 Support des commandes
42 Tube portant le volant
421 Extrémité cannelée
43 Palier à roulement
45 Découpe
5 Mécanisme de serrage
51 Levier
52 Axe de serrage
521 Extrémité filetée
522 Ecrou
53 Dispositif de serrage
54 Plaquette
541 Coupelle
542 Coulisse
55 Base
551 Coulisseau
552 Ergot
56 Nervure d'entraînement
6 Dispositif de butée de fin de course de compression
61 Butée de fin de course de compression
610 Dessus de la lame 615 ou du manchon 4
611 Languette
612 Bord de butée / bord formant la butée
613 Découpe de la lame
615 Lame
616 Rivet
62 Verrou
620 Dessous du verrou
621 Bec
622 Oreille
623 Ouverture circulaire
624 Coulisse en arc de cercle
624A, 624C Côtés de la coulisse
625 Surface de butée
626 Surface auxiliaire de butée
627 Surface d'appui
628 Surface d'appui
63 Ressort-lame
631 Pince
632 Ouverture circulaire
633 Découpe
634 Extrémité
64 Cale intermédiaire
- A: Plage de basculement / réglage angulaire
- B: Plage d'extension / réglage longitudinal
- B-: Sens de la compression
- B+: Sens de l'extension
- C: Plage de basculement du verrou
- XX: Axe géométrique d'extension de la colonne
- YY: Axe géométrique transversal de l'axe de serrage

## Revendications

1. Colonne de direction comportant :
- un corps (1) équipé d'un palier déformable (11),
- un manchon (4) destiné à porter un volant de direction, le manchon étant reçu dans le palier déformable (11), le manchon (4) étant réglable longitudinalement par rapport au corps dans un sens de compression et dans un sens d'extension opposé au sens de compression,
- un mécanisme de serrage (5) ayant un levier de manœuvre (51), un axe de serrage (52) et un dispositif de serrage (53) porté par l'axe de serrage (52), l'axe de serrage (52) pivotant avec le levier de manœuvre (51) entre une position de serrage (56A) dans laquelle le dispositif de serrage (53) comprime le palier déformable (11) de manière à bloquer le manchon (4) et une position de desserrage (56C) dans laquelle le manchon (4) est libre de coulisser longitudinalement par rapport au corps (1) en passant par une position intermédiaire de pré-serrage (56B) dans laquelle le dispositif de serrage (53) comprime le palier déformable (11) de manière à bloquer le manchon (4),
- un dispositif de butée (6) muni d'un bord de butée (612) porté par le manchon (4) et formant une butée de fin de course de réglage dans le sens de la compression,
- un verrou (62) monté sur l'axe de serrage (52) et apte à pivoter entre une position de verrouillage et une position de déverrouillage, le verrou (62) étant rappelé vers la position de verrouillage par un ressort (63), le verrou (62) ayant :
* un bec (621) poussé par le ressort (62) pour s'appliquer contre une surface (610) du manchon (4), et
* une surface de butée (625) portée par le bec (621) et apte à venir contre le bord de butée (612) du dispositif de butée (6) lorsque le manchon (4) en cours de réglage passe sous le verrou (62) et que le verrou (62), entraîné par le ressort, pivote en position de verrouillage, et définissant avec le bord de butée (612) une position de fin de course de réglage du manchon (4), une course de compression d'absorption d'énergie étant réservée au manchon (4) au-delà de la position de fin de course de réglage dans le sens de la compression,
**caractérisé en ce que**
- le verrou a une coulisse en arc de cercle (624) formant un dégagement en arc de cercle délimité par deux côtés (624A, 624C), et
- l'axe de serrage (52) a une nervure d'entraînement (56) reçue dans le dégagement en arc de cercle de la coulisse (624) entre les deux côtés (624A, 624C) de manière telle que :
* la nervure d'entraînement (56) n'interfère pas avec le verrou (62) lorsque le verrou (62) est dans la position de verrouillage et que l'axe de serrage (52) pivote entre la position de desserrage (56C) et la position de pré-serrage (56B),
* la nervure d'entraînement (56) rencontre un des côtés (624A) et entraîne le verrou (62) en position de déverrouillage lorsque l'axe de serrage (52) pivote de la position de pré-serrage (56B) à la position de serrage (56A).

2. Colonne de direction selon la revendication 1, **caractérisée en ce que** le dispositif de butée (6) comporte une découpe (613) formant le bord de butée (612), la découpe étant pratiquée dans le manchon (4) ou dans une lame (615) rapportée au manchon (4).

3. Colonne de direction selon la revendication 2, **caractérisée en ce que** la découpe (613) forme une languette (611) limitant le mouvement du verrou (62) au-delà de sa venue en appui par sa surface de butée (625) contre le bord de butée (612).

4. Colonne de direction selon la revendication 2, **caractérisée en ce que** le dispositif de butée (6) est réalisé dans une lame (615) fixée au manchon (4) dans une zone du manchon (4) passant sous le verrou (62).

5. Colonne de direction selon la revendication 1, **caractérisée en ce que** le verrou (62) est une pièce installée autour de l'axe de serrage (52) et ayant au moins une oreille (622) munie d'un orifice (623) pour recevoir l'axe (52), la coulisse en arc de cercle (624) bordant l'orifice (623), le ressort (63) étant solidaire de l'axe (52) et s'appuyant sur le bec (621).

6. Colonne de direction selon la revendication 5, **caractérisé en ce que** le verrou (62) comporte deux oreilles (622), pour chevaucher chacune l'axe de serrage (52) et la nervure (56), et **en ce que** la colonne de direction comporte en outre une cale (64) bloquée sur l'axe de serrage (52) et sur la nervure (56) pour retenir le verrou (62) par les deux oreilles (622) sur l'axe de serrage (52) et la nervure (56) dans la direction de l'axe (XX).

7. Colonne de direction selon la revendication 6, **caractérisé en ce que** le ressort (63) est un ressort de lame terminé par deux pinces (631) munies chacune d'un orifice (632) pour s'engager sur l'axe (52) par l'orifice (632), cet orifice étant muni d'une découpe (631) recevant la nervure (56) pour être solidarisée en rotation à l'axe (52).

## Patentansprüche

1. Lenksäule, aufweisend:
- einen Körper (1), der mit einem verformbaren Lager (11) ausgestattet ist,
- eine Hülse (4), die dafür bestimmt ist, ein Lenkrad zu tragen, wobei die Hülse in dem verformbaren Lager (11) aufgenommen ist, wobei die Hülse (4) in Bezug auf den Körper in einer Kompressionsrichtung und in einer der Kompressionsrichtung entgegengesetzten Erstreckungsrichtung in Längsrichtung einstellbar ist,
- einen Spannmechanismus (5), der einen Betätigungshebel (51), einen Spannbolzen (52) und eine Spannvorrichtung (53) besitzt, die durch den Spannbolzen (52) getragen wird, wobei der Spannbolzen (52) mit dem Betätigungshebel (51) zwischen einer Spannposition (56A), in der die Spannvorrichtung (53) das verformbare Lager (11) komprimiert, so dass die Hülse (4) blockiert wird, und einer Lockerungsposition (56C) schwenkt, in der die Hülse (4) in Längsrichtung in Bezug auf den Körper (1) bei Durchlaufen einer Vorspannzwischenposition (56B) frei gleiten kann, in der die Spannvorrichtung (53) das verformbare Lager (11) komprimiert, so dass die Hülse (4) blockiert wird,
- eine Anschlagsvorrichtung (6), die mit einer Anschlagskante (612) versehen ist, die durch die Hülse (4) getragen wird und einen Verstellendanschlag in der Kompressionsrichtung bildet,
- einen Sperrschieber (62), der an dem Spannbolzen (52) montiert ist und geeignet ist, um zwischen einer Sperrposition und einer Entsperrposition zu schwenken, wobei der Sperrschieber (62) durch eine Feder (63) in Richtung der Sperrposition zurückgezogen ist, wobei der Sperrschieber (62) besitzt:
* eine Spitze (621), die durch die Feder (62) gestoßen wird, um gegen eine Oberfläche (610) der Hülse (4) zu drücken, und
* eine Anschlagsoberfläche (625), die durch die Spitze (621) getragen wird und geeignet ist, um gegen die Anschlagskante (612) der Anschlagsvorrichtung (6) zu kommen, wenn die Hülse (4) in der Einstellung unter dem Sperrschieber (62) läuft, und die der Sperrschieber (62), getrieben durch die Feder, in die Sperrposition schwenkt und mit der Anschlagskante (612) eine Verstellendposition der Hülse (4) definiert, wobei ein Kompressionshub einer Energieabsorption für die Hülse (4) vorbehalten ist, über die Verstellendposition in der Kompressionsrichtung hinaus,
**dadurch gekennzeichnet, dass**
- der Sperrschieber eine kreisbogenförmige Gleitführung (624) besitzt, die eine kreisbogenförmige Aussparung bildet, die durch zwei Seiten (624A, 624C) begrenzt ist, und
- der Spannbolzen (52) eine Mitnehmerleiste (56) besitzt, die in der kreisbogenförmigen Aussparung der Gleitführung (624) zwischen den zwei Seiten (624A, 624C) derart aufgenommen ist, dass:
* die Mitnehmerleiste (56) den Sperrschieber (62) nicht stört, wenn sich der Sperrschieber (62) in der Sperrposition befindet, und der Spannbolzen (52) zwischen der Lockerungsposition (56C) und der Vorspannposition (56B) schwenkt,
* die Mitnehmerleiste (56) auf eine der Seiten (624A) trifft und den Sperrschieber (62) in die Entsperrposition treibt, wenn der Spannbolzen (52) von der Vorspannposition (56B) in die Spannposition (56A) schwenkt.

2. Lenksäule nach Anspruch 1, **dadurch gekennzeichnet, dass** die Anschlagsvorrichtung (6) einen Ausschnitt (613) aufweist, der die Anschlagskante (612) bildet, wobei der Ausschnitt in der Hülse (4) oder in einem an der Hülse (4) angebrachten Blatt (615) ausgebildet ist.

3. Lenksäule nach Anspruch 2, **dadurch gekennzeichnet, dass** der Ausschnitt (613) eine Zunge (611) bildet, die die Bewegung des Sperrschiebers (62) über seinen Gang hinaus durch ihre Anschlagsoberfläche (625) anliegend an die Anschlagskante (612) eingrenzt.

4. Lenksäule nach Anspruch 2, **dadurch gekennzeichnet, dass** die Anschlagsvorrichtung (6) in einem Blatt (615) umgesetzt ist, das an der Hülse (4) in einem Bereich der Hülse (4) fixiert ist, der unter dem Sperrschieber (62) läuft.

5. Lenksäule nach Anspruch 1, **dadurch gekennzeichnet, dass** der Sperrschieber (62) ein Teil ist, das um den Spannbolzen (52) herum installiert ist und mindestens eine Öse (622) besitzt, die mit einer Öffnung (623) zum Aufnehmen des Bolzens (52) versehen ist, wobei die kreisbogenförmige Gleitführung (624) die Öffnung (623) einfasst, wobei die Feder (63) einstückig mit dem Bolzen (52) ist und auf der Spitze (621) aufliegt.

6. Lenksäule nach Anspruch 5, **dadurch gekennzeichnet, dass** der Sperrschieber (62) zwei Ösen (622) zum Überdecken jeweils des Spannbolzens (52) und der Leiste (56) aufweist, und dass die Lenksäule ferner einen blockierten Keil (64) auf dem Spannbolzen (52) und auf der Leiste (56) zum Halten des Sperrschiebers (62) durch die zwei Ösen (622) auf dem Spannbolzen (52) und der Leiste (56) in der Richtung des Bolzens (XX) aufweist.

7. Lenksäule nach Anspruch 6, **dadurch gekennzeichnet, dass** die Feder (63) eine Blattfeder ist, die durch zwei Klammern (631) abgeschlossen ist, die jeweils mit einer Öffnung (632) zum Ineingriffnehmen des Bolzens (52) durch die Öffnung (632) versehen sind, wobei diese Öffnung mit einem Ausschnitt (631) versehen ist, der die Leiste (56) aufnimmt, die drehbar an dem Bolzen (52) befestigt werden soll.

## Claims

1. Steering column, comprising:
- a body (1) which is equipped with a deformable bearing (11),
- a sleeve (4) which is intended to support a steering wheel, the sleeve being received in the deformable bearing (11), the sleeve (4) being adjustable longitudinally with respect to the body in a direction of compression and in a direction of extension opposite to the direction of compression,
- a clamping mechanism (5) having an operating lever (51), a clamping shaft (52) and a clamping device (53) supported by the clamping shaft (52), the clamping shaft (52) pivoting with the operating lever (51) between a clamping position (56A) in which the clamping device (53) compresses the deformable bearing (11) so as to block the sleeve (4), and a release position (56C) in which the sleeve (4) is free to slide longitudinally relative to the body (1) while passing through an intermediate pre-clamping position (56B) in which the clamping device (53) compresses the deformable bearing (11) so as to block the sleeve (4),
- a stop device (6) which is provided with a stop edge (612) supported by the sleeve (4) and forming an adjustment limit stop in the direction of compression,
- a bolt (62) mounted on the clamping shaft (52) and capable of pivoting between a locking position and an unlocking position, the bolt (62) being returned to the locking position by a spring (63), the bolt (62) having:
* a tip (621) pushed by the spring (62) to abut a surface (610) of the sleeve (4), and
* an stop surface (625) supported by the tip (621) and capable of coming against the stop edge (612) of the stop device (6) when the sleeve (4), as it is adjusted, passes under the bolt (62) and the bolt (62), driven by the spring, pivots into the locking position, and defining, with the stop edge (612), an adjustment limit position of the sleeve (4), an energy absorption compression course being reserved for the sleeve (4) beyond the adjustment limit position in the direction of compression,
**characterized in that**
- the bolt has an arcuate groove (624) forming an arcuate clearance delimited by two sides (624A, 624C), and
- the clamping shaft (52) has a drive rib (56) received in the arcuate clearance of the groove (624) between the two sides (624A, 624C) such that:
* the drive rib (56) does not interfere with the bolt (62) when the bolt (62) is in the locking position and the clamping shaft (52) pivots between the release position (56C) and the pre-clamping position (56B),
* the drive rib (56) meets one of the sides (624A) and drives the bolt (62) into the unlocking position when the clamping shaft (52) pivots from the pre-clamping position (56B) to the clamping position (56A).

2. Steering column according to claim 1, **characterized in that** the stop device (6) comprises a slot (613) forming the stop edge (612), the slot being provided in the sleeve (4) or in a blade (615) attached to the sleeve (4).

3. Steering column according to claim 2, **characterized in that** the slot (613) forms a tongue (611) preventing the bolt (62) from moving beyond its abutment with the stop surface (625) against the stop edge (612).

4. Steering column according to claim 2, **characterized in that** the stop device (6) is provided in a blade (615) fixed to the sleeve (4) in a zone of the sleeve (4) that passes under the bolt (62).

5. Steering column according to claim 1, **characterized in that** the bolt (62) is a part installed around the clamping shaft (52) and having at least one lug (622) provided with an opening (623) to receive the shaft (52), the arcuate groove (624) lining the opening (623), the spring (63) being integral with the shaft (52) and abutting the tip (621).

6. Steering column according to claim 5, **characterized in that** the bolt (62) comprises two lugs (622), each of which overlaps the clamping shaft (52) and the rib (56), and **in that** the steering column further comprises a spacer (64) which is locked on the clamping shaft (52) and on the rib (56) to retain the bolt (62) by means of the two lugs (622) on the clamping shaft (52) and the rib (56) in the direction of the axis (XX).

7. Steering column according to claim 6, **characterized in that** the spring (63) is a leaf spring terminated by two clips (631) which are each provided with an opening (632) for engaging on the shaft (52) through the opening (632), this opening being provided with a slot (631) which receives the rib (56) so as to be secured in rotation to the shaft (52).
